# EUROPEAN PATENT SPECIFICATION

(11) **EP 2 812 361 B1**
(45) Date of publication and mention of the grant of the patent: **18.01.2017**
(21) Application number: 13702653.0
(22) Date of filing: 07.02.2013
(51) Int. Cl.: C08F 4/42, C09D 5/16, C08F 2/44, A01N 43/40

(54) **METHOD TO PREVENT DEACTIVATION OF METAL CATALYSTS IN CATALYTIC POLYMERISATION PROCESSES**
VERFAHREN ZUM VERHINDERN DER DEAKTIVIERUNG VON METALLKATALYSATOREN IN KATALYTISCHEN POLYMERISIERUNGSVERFAHREN
PROCÉDÉ POUR PRÉVENIR LA DÉSACTIVATION DE CATALYSEURS MÉTALLIQUES DANS DES PROCESSUS DE POLYMÉRISATION CATALYTIQUE

(30) Priority: 08.02.2012 EP 12154447
(43) Date of publication of application: 17.12.2014
(73) Proprietor: Janssen Pharmaceutica, N.V., 2340 Beerse (BE)
(72) Inventor: DE MEYER, Kurt, Mark, Anthony, B-2340 Beerse (BE)
(74) Representative: Verberckmoes, Filip Gerard
(86) International application number: PCT/EP2013/052395
(87) International publication number: WO 2013/117626

(56) References cited:
- US-A- 5 137 569
- US-A- 5 518 774
- US-A- 5 883 154
- US-A1- 2007 053 950
- US-A1- 2007 117 895
- DOUGLAS K SIMPSON ET AL: "Long term protection with fungicide and algicide development", PPCJ. POLYMERS PAINT COLOUR JOURNAL, FMJ INTERNATIONAL, REDHILL, GB, vol. 186, 1 January 1996 (1996-01-01), pages 7-8, XP009159926, ISSN: 1357-731X
- DATABASE WPI Week 201135 Thomson Scientific, London, GB; AN 2010-Q56357 XP002677059, -& BR PI0 900 643 A2 (ISOLUCKS DO BRASIL LTDA EPP) 9 November 2010 (2010-11-09)
- DATABASE WPI Week 200014 Thomson Scientific, London, GB; AN 2000-156859 XP002677060, -& JP 2000 017201 A (DAINIPPON TORYO KK) 18 January 2000 (2000-01-18)

## Description

The present invention relates to a method to prevent deactivation of the metal catalyst in a catalytic polymerisation process of polymeric binders whereby pyrithione biocides are present which method comprises the addition of a Zn, Cu or Na salt selected from Zn, Cu or Na salts of fatty acids such as e.g. Zn, Cu or Na octoate; Zn, Cu or Na acrylate; Zn, Cu or Na neodecanoate; or Zn, Cu or Na salts of beta diketones such as e.g. Zn, Cu or Na acetylacetonate.

Pyrithione biocides such as e.g. zinc pyrithione, copper pyrithione, and sodium pyrithione are excellent broad-spectrum antimicrobial agents and are used as a biocide and preservative in fluids, paints, cosmetics etc.

Many plastic polymerization reactions are accelerated via metal catalysts (e.g., Pt, Co, Ag, Mg, ...). Besides the basic polymerization reactants, often specific additives (anti-oxidants, anti-statics, flame retardants, pigments, fillers, antimicrobials, ...) are incorporated in such plastic polymers, which should not significantly interfere with the catalyst. Additives with (trans)chelating properties, on the other hand, can dramatically disturb or even completely block the polymerization reaction by binding the metal catalyst thereby deactivating its catalytic properties. An example of such additives with (trans)chelating properties are the pyrithione biocides zinc pyrithione, copper pyrithione, and sodium pyrithione. In order to prevent the deactivation of the metal catalyst during the polymerization reaction, a suitable stabilizing agent should be added to the polymerization reaction in sufficient amounts, in order to shift the chelation of the catalyst towards chelation of the added metal of the metal salt.

It has now been found that the addition of suitable Zn, Cu or Na salts selected from Zn, Cu or Na salts of fatty acids such as e.g. Zn, Cu or Na octoate; Zn, Cu or Na acrylate; Zn, Cu or Na neodecanoate; or Zn, Cu or Na salts of beta diketones such as e.g. Zn, Cu or Na acetylacetonate, is helpful to prevent deactivation of the metal catalyst during the catalytic polymerisation process of polymeric binders.

Composite materials are engineered materials made from two or more constituent materials with significantly different physical or chemical properties which remain separate and distinct at the macroscopic or microscopic scale within the finished structure. In order to bind all constituent materials together a matrix material is used which is often a polymeric material obtained by a catalytic polymerisation process of polymeric binders. It can be beneficial to add a pyrithione biocide to such composite materials and in order to prevent deactivation of the metal catalyst during the catalytic polymerisation process one or more Zn, Cu or Na salts selected from Zn, Cu or Na salts of fatty acids such as e.g. Zn, Cu or Na octoate; Zn, Cu or Na acrylate; Zn, Cu or Na neodecanoate; or Zn, Cu or Na salts of beta diketones such as e.g. Zn, Cu or Na acetylacetonate can be added in accordance with the present invention.

An example of composite materials are e.g. fiber reinforced polyester ship hulls whereby a pyrithione biocide is added to prevent fouling.

The polymeric binder used in the catalytic polymerisation process of the present invention may be formed of a polymer, a mixture of polymers (for example, polyester and urethane), monomers, and mixtures of monomers and polymers. Examples of suitable polymers include polyester, unsaturated polyester, vinyl ester, epoxy, phenolic resin, urethane and mixtures thereof. Examples of monomers for the polymeric binder include alpha, beta-ethylenically unsaturated monomers, e.g., styrene and styrene derivatives; lower alkyl substituted styrenes; alpha-methyl styrene; vinyl toluene; divinyl benzene; acrylics; C₁₋₁₈alkyl esters of acrylic and methacrylic acids, e.g., methyl acrylate, ethyl acrylate, isopropyl acrylate, butyl acrylate, 2-ethylhexyl acrylate, methyl methacrylate, ethyl methacrylate, isopropyl methacrylate, and butyl methacrylate; and phenols, furans and the like. These monomers may be used alone or in combination.

An often used polymeric binder is unsaturated polyester or unsaturated polyester resins (UP). Unsaturated polyester resins are solutions of unsaturated polyesters in copolymerizable monomers, preferably in styrene. Suitable unsaturated polyesters are the usual condensation products of polybasic, in particular dibasic carboxylic acids and their esterifiable derivatives, in particular their anhydrides, which are bonded in the way of an ester with polyhydric, in particular dihydric alcohols, and which may additionally contain residues of monobasic carboxylic acids or monohydric alcohols, with at least part of the starting materials being provided with ethylenically unsaturated, copolymerizable groups. Other unsaturated polyesters are those on the basis of maleic anhydride and orthophthalic acid or isophthalic acid, on the one hand, and propylene glycol, ethylene glycol, diethylene glycol and/or dipropylene glycol on the other hand.

Deactivation of the metal catalyst typically results in extended curing time or incomplete curing of the polymer formed in the catalytic polymerisation process. The addition of a Zn, Cu or Na salt in accordance with the present invention prevents deactivation of the metal catalyst resulting in reduced curing times.

The amount of a Zn, Cu or Na salt added in the catalytic polymerisation process is such that deactivation of the metal catalyst is prevented when pyrithione biocides are present so that curing time is not negatively impacted. In practice it has been found that the Zn, Cu or Na salt has to be added in an amount of at least a 0.1 : 1 weight ratio of Zn, Cu or Na salt vs. pyrithione biocide. A higher ratio of Zn, Cu or Na salt vs. pyrithione biocide has been found to yield shorter curing times. In accordance with the invention, the Zn, Cu or Na salt is added in an amount of at least a 3 : 1 weight ratio of Zn, Cu or Na salt to pyrithione biocide. Typical weight/weight ratios in practice of Zn, Cu or Na salt vs. pyrithione biocide are 3:1,4:1,5:1,6:1, 10:1 up to 20:1 which gives the following ranges : 3:1 to 20:1; 4:1 to 20:1; 5:1 to 20:1; 10:1 to 20:1; and also 3:1 to 10:1; 4:1 to 10:1; 5:1 to 10:1.

When the pyrithione biocide is zinc pyrithione than preferably the zinc salts of the fatty acids or beta diketones are used selected from zinc octoate, zinc acrylate, zinc neodecanoate, and zinc acetylacetonate.

When the pyrithione biocide is copper pyrithione than preferably the copper salts of the fatty acids or beta diketones are used selected from copper octoate, copper acrylate, copper neodecanoate, and copper acetylacetonate.

When the pyrithione biocide is sodium pyrithione than preferably the sodium salts of the fatty acids or beta diketones are used selected from sodium octoate, sodium acrylate, sodium neodecanoate, and sodium acetylacetonate.

The pyrithione biocide and the Zn, Cu or Na salts of the present invention can be added seperately to the catalytic polymerisation process whereby the sequence of addition can be first the pyrithione biocide followed by the Zn, Cu or Na salt, or it can be first the Zn, Cu or Na salt followed by the pyrithione biocide.

Alternatively the pyrithione biocide and the Zn, Cu or Na salts of the present invention can be added simultaneously to the catalytic polymerisation process either as seperate products or as a combination product. Said combination product can be any formulation comprising both the pyrithione biocide and the Zn, Cu or Na salt together with any optional excipients.

### Experimental part

### Experiment 1 : polyester polymer

Sample preparation :
- weigh the amount of unsaturated polyester resin (= polymeric binder) into a glass beaker
- add zinc pyrithione to the unsaturated polyester resin and homogenize by high-performance dispersing
- add zinc salt to the unsaturated polyester resin and homogenize by high-performance dispersing
- add cobalt catalyst to previous mixture and homogenize by gentle dispersing
- add peroxide radical initiator to previous mixture and homogenize by gentle dispersing
- pour the mixture into a glass casting and place sample at 80°C in the oven to allow curing of the polymer

The reaction exotherms as a function of time were measured.

**Table 1 :**

| | Sample 1 | Sample 2 | Sample 3 |
|---|---|---|---|
| Composition | Concentration (% w/w) | Concentration (% w/w) | Concentration (% w/w) |
| Zinc pyrithione | 0,6 | 0,6 | 0,6 |
| Zinc salt | 1 | 2 | 4 |
| Co catalyst (6%) | 0,4 | 0,4 | 0,4 |
| Peroxide | 2 | 2 | 2 |
| Unsaturated polyester resin | 96 | 95 | 93 |

**Table 2 :**

| | Sample 4 | Sample 5 | Sample 6 |
|---|---|---|---|
| Composition | Concentration (% w/w) | Concentration (% w/w) | Concentration (% w/w) |
| Zinc pyrithione | 0,8 | 0,8 | 0,8 |
| Zinc salt | - | 4 | 8 |
| Co catalyst (6%) | 0,4 | 0,4 | 0,4 |
| Peroxide | 2 | 2 | 2 |
| Unsaturated polyester resin | 96.8 | 92.8 | 88.8 |

Co catalyst : Nusa cobalt™ 6% (CAS : 83711-44-8) commercially available from Nusa Iberica S.A., Rio Tajuña 5, 28850 Torrejón de Ardoz, Madrid, Spain
Unsaturated polyester resin : Synolite 9286-N-0T™ commercially available from DSM, Netherlands, which is a a low viscous monomer free unsaturated polyester resin Zinc compound used :
zinc octoate
zinc acrylate
zinc neodecanoate
zinc acetylacetonate

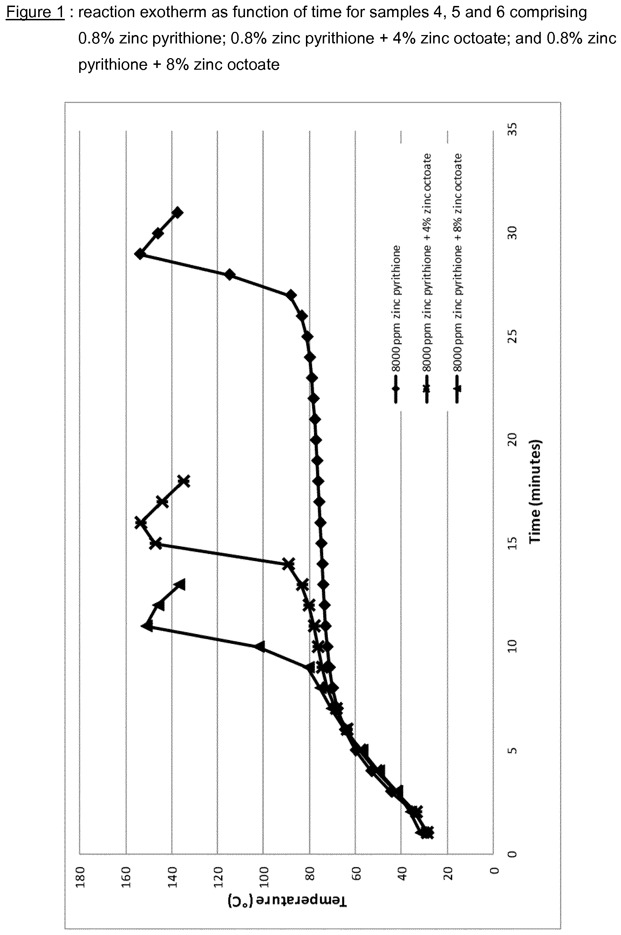

The reaction exotherms as function of time for the samples 4, 5 and 6 has been depicted in Figure 1. As can be seen from the reaction exotherms, the addition of the zinc octoate as a zinc salt resulted in a reduction of the curing time of the polyester polymer. Sample 4 (no zinc salt present) had a curing time of about 29 minutes, sample 5 (4 % w/w zinc octoate) has a curing time of about 16 minutes and sample 6 (8% w/w zinc octoate) had a curing time of about 12 minutes.

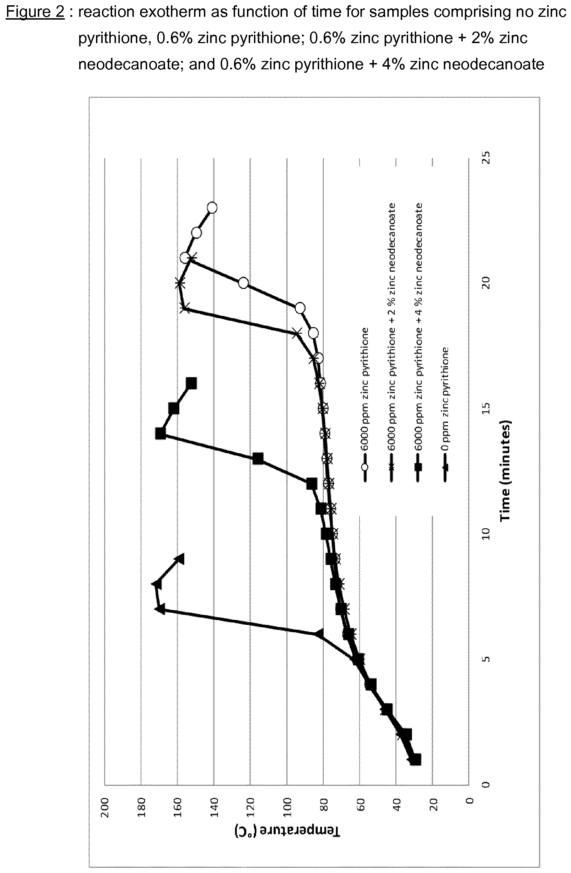

Fig. 2 demonstrates two aspects :
a) the curing time of a sample with 0 ppm zinc pyrithione is much shorter (about 7 minutes) compared to the curing time of a sample with 6000 ppm zinc pyrithione (about 21 minutes)
b) a higher amount of zinc salt results in a more pronounced prevention of deactivation of the metal catalyst resulting in e.g. a faster curing time : the addition of 2% zinc neodecanoate or 4% zinc neodecanoate to a sample comprising 0.6% zinc pyrithione results in improved curing time to a sample comprising 0.6% zinc pyrithione without said zinc salts present

### Description of the drawings

Figure 1 : reaction exotherm as function of time for samples 4, 5 and 6 comprising 0.8% zinc pyrithione; 0.8% zinc pyrithione + 4% zinc octoate; and 0.8% zinc pyrithione + 8% zinc octoate
Figure 2 : reaction exotherm as function of time for samples comprising no zinc pyrithione; 0.6% zinc pyrithione; 0.6% zinc pyrithione + 2% zinc neodecanoate; and 0.6% zinc pyrithione + 4% zinc neodecanoate

## Claims

1. A method to prevent deactivation of a metal catalyst in a catalytic polymerisation process of polymeric binders whereby pyrithione biocides selected from zinc pyrithione, copper pyrithione, and sodium pyrithione, are present **characterized by** the addition of a suitable Zn, Cu or Na salt selected from Zn, Cu or Na salts of fatty acids or Zn, Cu or Na salts of beta diketones; whereby the Zn, Cu or Na salt is added in an amount of at least a 3 : 1 weight ratio of Zn, Cu or Na salt to pyrithione biocide.

2. The method according to claim 1 wherein the Zn, Cu or Na salts of fatty acids are selected from Zn, Cu or Na octoate; Zn, Cu or Na acrylate; Zn, Cu or Na neodecanoate; and the Zn, Cu or Na salts of beta diketones are selected from Zn, Cu or Na acetylacetonate.

3. The method according to claim 2 wherein the weight/weight ratio of Zn, Cu or Na salt to pyrithione biocide ranges from 3:1 to 20:1.

4. The method according to claim 2 wherein the weight/weight ratio of Zn, Cu or Na salt to pyrithione biocide ranges from 3:1 to 10:1.

5. The method according to claim 2 wherein the weight/weight ratio of Zn, Cu or Na salt to pyrithione biocide is 5 : 1.

6. The method according to claim 2 wherein the weight/weight ratio of Zn, Cu or Na salt to pyrithione biocide is 10 : 1.

7. The method according to any one of the preceding claims wherein the pyrithione biocide is zinc pyrithione.

8. The method according to claim 7 wherein the Zn, Cu or Na salt is a Zn salt selected from zinc octoate, zinc acrylate, zinc neodecanoate, and zinc acetylacetonate.

9. The method according to claim 8 wherein the Zn, Cu or Na salt is a Zn salt selected from zinc octoate and zinc neodecanoate.

10. The method according to any one of claims 1 to 9 wherein the pyrithione biocide and the Zn, Cu or Na salt are added seperately to the catalytic polymerisation process.

11. The method according to any one of claims 1 to 9 wherein the pyrithione biocide and the Zn, Cu or Na salt are added simultaneously to the catalytic polymerisation process.

12. The method according to claim 11 wherein the pyrithione biocide and the Zn, Cu or Na salt are added as a combination product to the catalytic polymerisation process.

13. The method according to any one of the preceding claims wherein the metal catalyst comprises cobalt.

14. The method according to any one of the preceding claims wherein the polymeric binder is an unsaturated polyester resin.

## Patentansprüche

1. Verfahren zum Verhindern der Deaktivierung eines Metallkatalysators bei einem katalytischen Polymerisationsverfahren polymerer Bindemittel, bei dem Pyrithionbiozide ausgewählt aus Zinkpyrithion, Kupferpyrithion und Natriumpyrithion gegenwärtig sind, **gekennzeichnet durch** die Zugabe eines geeigneten Zn-, Cu- oder Na-Salzes ausgewählt aus Zn-, Cu- oder Na-Salzen von Fettsäuren oder Zn-, Cu- oder Na-Salzen von beta-Diketonen, wobei das Zn-, Cu- bzw. Na-Salz in einer Menge von einem Gewichtsverhältnis von mindestens 3:1 von Zn-, Cu- bzw. Na-Salz zu Pyrithionbiozid zugesetzt wird.

2. Verfahren nach Anspruch 1, wobei die Zn,-, Cu- oder Na-Salze von Fettsäuren aus Zn-, Cu- oder Na-Octoat, Zn-, Cu- oder Na-Acrylat, Zn-, Cu- oder Na-Neodecanoat ausgewählt sind und die Zn-, Cu- oder Na-Salze von beta-Diketonen aus Zn-, Cu- oder Na-Acetylacetonat ausgewählt sind.

3. Verfahren nach Anspruch 2, wobei das Gewichtsverhältnis von Zn-, Cu- oder Na-Salz zu Pyrithionbiozid im Bereich von 3:1 bis 20:1 liegt.

4. Verfahren nach Anspruch 2, wobei das Gewichtsverhältnis von Zn-, Cu- oder Na-Salz zu Pyrithionbiozid im Bereich von 3:1 bis 10:1 liegt.

5. Verfahren nach Anspruch 2, wobei das Gewichtsverhältnis von Zn-, Cu- oder Na-Salz zu Pyrithionbiozid 5:1 beträgt.

6. Verfahren nach Anspruch 2, wobei das Gewichtsverhältnis von Zn-, Cu- oder Na-Salz zu Pyrithionbiozid 10:1 beträgt.

7. Verfahren nach einem der vorhergehenden Ansprüche, wobei es sich bei dem Pyrithionbiozid um Zinkpyrithion handelt.

8. Verfahren nach Anspruch 7, wobei es sich bei dem Zn-, Cu- oder Na-Salz um ein Zn-Salz ausgewählt aus Zinkoctoat, Zinkacrylat, Zinkneodecanoat und Zinkacetylacetonat handelt.

9. Verfahren nach Anspruch 8, wobei es sich bei dem Zn-, Cu- oder Na-Salz um ein Zn-Salz ausgewählt aus Zinkoctoat und Zinkneodecanoat handelt.

10. Verfahren nach einem der Ansprüche 1 bis 9, bei dem man das Pyrithionbiozid und das Zn-, Cu- oder Na-Salz getrennt zum katalytischen Polymerisationsverfahren gibt.

11. Verfahren nach einem der Ansprüche 1 bis 9, bei dem man das Pyrithionbiozid und das Zn-, Cu- oder Na-Salz gleichzeitig zum katalytischen Polymerisationsverfahren gibt.

12. Verfahren nach Anspruch 11, bei dem man das Pyrithionbiozid und das Zn-, Cu- oder Na-Salz als Kombinationsprodukt zum katalytischen Polymerisationsverfahren gibt.

13. Verfahren nach einem der vorhergehenden Ansprüche, bei dem der Metallkatalysator Kobalt umfasst.

14. Verfahren nach einem der vorhergehenden Ansprüche, wobei es sich bei dem polymeren Bindemittel um ein ungesättigtes Polyesterharz handelt.

## Revendications

1. Procédé de prévention de la désactivation d'un catalyseur métallique dans un procédé de polymérisation catalytique de liants polymères dans lequel des biocides à base de pyrithione choisis parmi la pyrithione de zinc, la pyrithione de cuivre et la pyrithione de sodium sont présents, **caractérisé par** l'ajout d'un sel de Zn, Cu ou Na approprié choisi parmi les sels de Zn, Cu ou Na d'acides gras ou les sels de Zn, Cu ou Na de bêta-dicétones ; le sel de Zn, Cu ou Na étant ajouté dans une quantité donnant un rapport pondéral d'au moins 3:1 entre le sel de Zn, Cu ou Na et le biocide à base de pyrithione.

2. Procédé selon la revendication 1 dans lequel les sels de Zn, Cu ou Na d'acides gras sont choisis parmi l'octoate de Zn, Cu ou Na ; l'acrylate de Zn, Cu ou Na ; le néodécanoate de Zn, Cu ou Na ; et les sels de Zn, Cu ou Na de bêta-dicétones sont choisis parmi l'acétylacétonate de Zn, Cu ou Na.

3. Procédé selon la revendication 2 dans lequel le rapport poids/poids entre le sel de Zn, Cu ou Na et le biocide à base de pyrithione va de 3:1 à 20:1.

4. Procédé selon la revendication 2 dans lequel le rapport poids/poids entre le sel de Zn, Cu ou Na et le biocide à base de pyrithione va de 3:1 à 10:1.

5. Procédé selon la revendication 2 dans lequel le rapport poids/poids entre le sel de Zn, Cu ou Na et le biocide à base de pyrithione est de 5:1.

6. Procédé selon la revendication 2 dans lequel le rapport poids/poids entre le sel de Zn, Cu ou Na et le biocide à base de pyrithione est de 10:1.

7. Procédé selon l'une quelconque des revendications précédentes dans lequel le biocide à base de pyrithione est la pyrithione de zinc.

8. Procédé selon la revendication 7 dans lequel le sel de Zn, Cu ou Na est un sel de Zn choisi parmi l'octoate de zinc, l'acrylate de zinc, le néodécanoate de zinc et l'acétylacétonate de zinc.

9. Procédé selon la revendication 8 dans lequel le sel de Zn, Cu ou Na est un sel de Zn choisi parmi l'octoate de zinc et le néodécanoate de zinc.

10. Procédé selon l'une quelconque des revendications 1 à 9 dans lequel le biocide à base de pyrithione et le sel de Zn, Cu ou Na sont ajoutés séparément au procédé de polymérisation catalytique.

11. Procédé selon l'une quelconque des revendications 1 à 9 dans lequel le biocide à base de pyrithione et le sel de Zn, Cu ou Na sont ajoutés simultanément au procédé de polymérisation catalytique.

12. Procédé selon la revendication 11 dans lequel le biocide à base de pyrithione et le sel de Zn, Cu ou Na sont ajoutés sous la forme d'un produit de combinaison au procédé de polymérisation catalytique.

13. Procédé selon l'une quelconque des revendications précédentes dans lequel le catalyseur métallique comprend du cobalt.

14. Procédé selon l'une quelconque des revendications précédentes dans lequel le liant polymère est une résine de polyester insaturé.
